# EUROPEAN PATENT SPECIFICATION

(11) **EP 1 388 267 B1**
(45) Date of publication and mention of the grant of the patent: **06.05.2009**
(21) Application number: 02740428.4
(22) Date of filing: 18.03.2002
(51) Int. Cl.: H04W 84/08

(54) **DUAL MODE RADIO COMMUNICATIONS TRANSCEIVER AND A SYSTEM AND METHOD OF USING THE SAME**
ZWEIFACHMODUS-RADIOKOMMUNIKATIONSZENDER-EMPFÄNGER UND EIN SYSTEM UND VERFAHREN ZU DEREN ANWENDUNG
EMETTEUR RECEPTEUR DE COMMUNICATION RADIO DOUBLE MODE, SYSTEME ET PROCEDE D'UTILISATION DE CET EMETTEUR RECEPTEUR

(30) Priority: 09.05.2001 GB 0111327
(43) Date of publication of application: 11.02.2004
(73) Proprietor: MOTOROLA, INC., Schaumburg, IL 60196 (US); Motorola Limited, Basingstoke, Hampshire RG22 4PD (GB)
(72) Inventor: SHAHAF, Mark, 77462 Ashdod (IL); SERFATY, Salomon, 60951 Israel (IL)
(74) Representative: McCormack, Derek James
(86) International application number: PCT/EP2002/003092
(87) International publication number: WO 2002/091769

(56) References cited:
- GB-A- 2 287 612
- US-A- 5 978 367
- US-A- 5 995 500

## Description

### Field of the Invention

This invention relates to a radio communications transceiver and a system and method of using the same. In particular, the invention is applicable to, but not limited to, a dual mode communications transceiver unit capable of communicating in a first communication system or in a first mode of operation whilst monitoring communications from a second communication system or using second mode of operation.

### Background of the Invention

Wireless communication systems are distinguished over fixed communication systems, such as the public switched telephone networks (PSTN), principally in that subscriber units move between communication service areas and providers and in doing so encounter varying radio propagation environments. Therefore, the quality of a communication link to/from a subscriber unit varies as the subscriber unit changes location.

The subscriber units are typically either vehicular-mounted 'mobile' or 'hand-portable' radio or cellular transceiver units. Henceforth, the term 'MS' (mobile station) will be used to embrace all such subscriber units.

Wireless communication systems, for example cellular telephony or private mobile radio communication systems, typically provide for radio telecommunication links to be arranged between a number of subscriber units.

In a wireless communication system, there are typically two methods of communicating to a MS. A first method is a direct communication between two MSs. A second method uses an intermediary station to forward a received communication from a first MS to a second MS. The intermediary station may be a base transceiver station (BTS) connected to the communication system infrastructure.

A BTS is generally considered an "intelligent" terminal, as it has the processing and control capability to influence a substantial amount of the communication traffic passing through it.

A further intermediary station is a radio repeater station, which performs a minimal amount of processing in receiving a communication from a first MS and retransmitting the received communication to at least one second MS. As a repeater station has little control or influence over the communication passing through it, it is often termed a "dummy" terminal.

The communication link from a BTS or a repeater to a MS is generally referred to as a down-link communication channel. Conversely, the communication link from a MS to a BTS or a Repeater is generally referred to as an up-link communication channel.

Multiple access techniques permit simultaneous communication links to be set-up to/from several MS over a plurality of communications channels. Some channels are used for carrying 'traffic', i.e. data sent from a user, e.g. a signal representative of a user's speech, whilst other channels (which may be logical or dedicated channels) are used for transferring control data, i.e. data containing information about the control parameters of the system. Examples of known multiple access techniques include: frequency division multiple access (FDMA), time division multiplexing/ multiple access (TDM, TDMA) and code division multiple access (CDMA).

In a wireless private mobile radio (PMR) communication system, it is known that a MS may operate outside a dedicated network coverage area by communicating in a direct communication link with at least one other MS. Such a communication mode is generally referred to as Direct Mode Operation (DMO). This term is in contrast to Trunked mode operation (TMO) that enables the MS to work within a network coverage, e.g. a cellular network with communications controlled and facilitated by a switching and management infrastructure (SwMI). Hence, when a MS operates in DMO, there is no dedicated system controller and therefore no centralised timing synchronisation or infrastructure-controlled power control to help minimise interference.

In direct-mode, communication links are established in a similar manner as to the back-to-back operation of conventional half duplex radio schemes used by many existing private mobile radio systems such as that of the emergency services. The direct-mode communication links are generally limited in range due to limitations imposed on the transmit power of the communication unit, channel conditions and configuration, obstacles in the communication path, etc.

A known technique whereby a communication unit can operate in both trunked and direct-mode operation has been defined by the European Telecommunication Standards Institute (ETSI) in the Terrestrial Trunked Radio (TETRA) standard in ETS-300-396-4. In such a communication system, a communication unit is able to operate in one mode (or communication system), whilst being aware of activity in the other mode (or communication system). This mode of operation is termed "dual-watch".

Dual watch operation allows a MS using, say, a direct mode service to monitor a communication resource of the trunked radio communication system for any incoming signals addressed to the MS. Operating in dual-watch, a MS is capable of being active in a direct mode communication whilst monitoring a trunking communication resource and vice versa.

In particular, a control channel may be established whereby the system controller of the trunked radio communication system sets up communications for MSs. The control channel may then be monitored by the MS operating in dual-watch or even as a gateway transceiver (mobile repeater).

In summary, a dual watch MS is capable of monitoring direct mode channels/resources whilst in trunking mode or trunking communication channels/resources whilst in direct mode.

The dual watch facility is often used when one or more of the radios in a local back-to-back group is/are within the range of the trunked system. By selectively listening in to the trunked system, it is possible for a MS operating in a DMO group communication to be contacted, if required, by the trunked system. In a similar way, if a MS operating in trunked mode is within range of its DMO talk group then it is able to perform dual-watch on the DMO talk-group and be included in any calls that are accordingly set up.

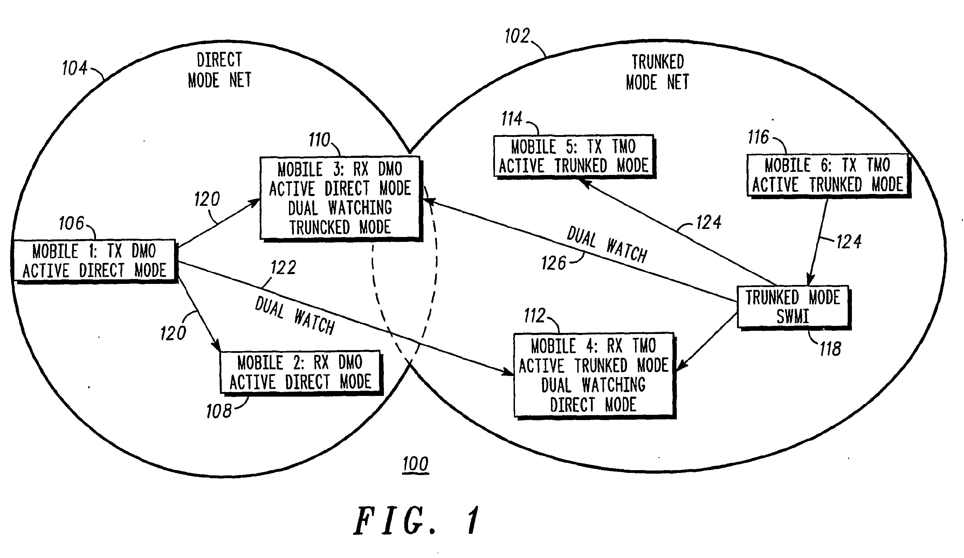

FIG. 1 shows a (prior art) TETRA communication system providing for both direct mode and trunked mode operations. The communication system 100 includes two separate physical groupings of MSs, often termed mobile nets, providing communication services to a number of MSs (MS-1 to MS-6) 106-116. One net services direct mode communications 104 and the other net services trunked mode communications 102. For simplicity purposes, one MS in each net is shown eavesdropping (dual-watching) on activity in the other net.

A first MS, MS-1 106, transmits on a Direct Mode channel 120 and this is received directly by MS-2 108 and MS-3 110. A further MS, MS-4 112, is in active Trunk Mode communicating to the trunked mode SwMI 118, but operates a Dual-Watch facility monitoring 122 the Direct Mode Channel. MS-4 112 is also in range of MS-1 106 and receives transmissions from MS-1 106.

As such, MS-4 112 also receives the Direct Mode set-up from MS-1 106 and the user of MS-4 112 receives an indication that a Direct Mode set-up has been received. The user of MS-4 112 may choose to switch to direct mode operation to join the direct mode call that is being set up on the Direct Mode net 104.

In TETRA systems, once the direct mode call has been set up, there is an intrinsic late entry message sequence transmitted at the start of each call transaction when other dual watch trunked mode MSs may join the call.

Alternatively, MS-6 116 transmits on the Trunk Mode channel 124. MSs, particularly MS-4 112 and MS-5 114 receive transmissions from MS-6 116 via the Trunked Mode infrastructure/SwMI 118. In addition, MS-3 110 is in active Direct Mode but has a Dual Watch facility 126 and is in range of the infrastructure/SwMI 118.

Hence, MS-3 110 periodically monitors the Trunk Mode Control channel and receives the Trunk Mode set-up from the infrastructure/SwMI 118. The user of MS-3 110 may choose to switch to trunked mode operation to join a trunked mode call that is being set up.

In the TETRA specification, whilst all MSs may be members of the same talk group it is possible for two independent calls to be set up, as shown with reference to FIG. 1, one call is on the trunked network and the other call is as a DMO call.

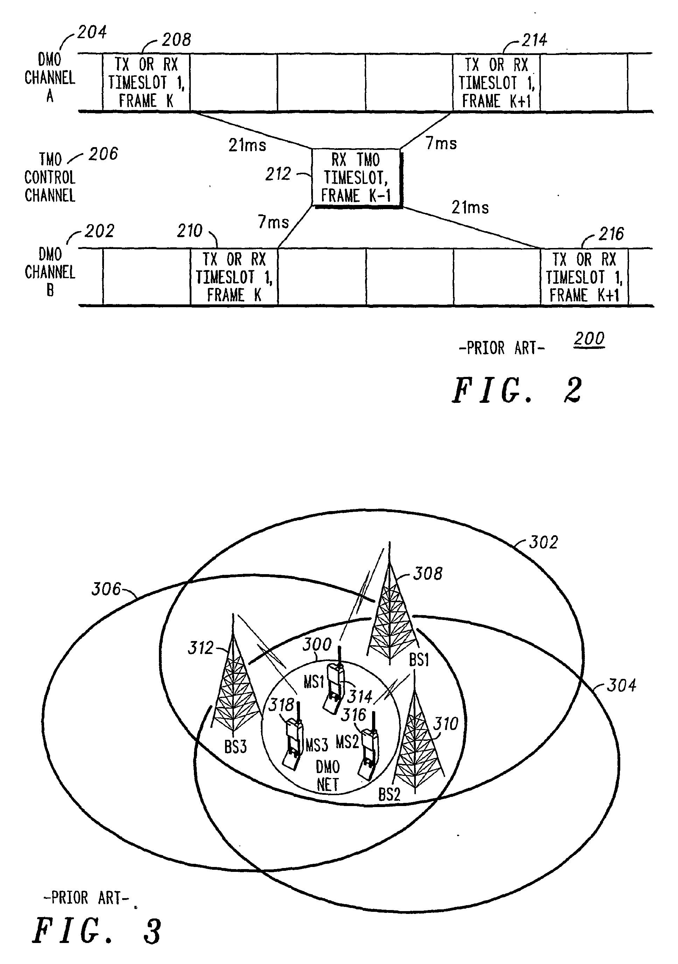

This dual watch capability in TETRA is achieved using a specific TDMA structure of the communications link as shown in FIG. 2. The TDMA structure 200 includes four time slots (individual communication resources) per frame in both TMO and DMO links.

Since the DMO link can use two timeslots (forward and reverse) it is possible to use two independent channels, channel 'A' 202 and channel 'B' 204 on the same frequency. Dual-watch can be performed on both these DMO channels, whilst allowing the MS to eavesdrop communication activity on TMO channel 206. This requires an accurate timing arrangement between TMO and DMO channels.

The inventors of the present invention have recognised that a number of problem situations may exist with the aforementioned TETRA dual-watch arrangement. One such problem situation is shown with respect to FIG. 3.

A DMO net 300 is shown within the middle of three TMO nets 302, 304, 306. Communication is facilitated on each of the TMO nets by respective base transceiver stations BS-1 308, BS-2 310 and BS-3 312. Whilst there is no DMO call MS-1 314 is serviced by, and primarily listening to, BS-1 308, although it is able to receive transmissions from BS-2 310 and BS-3 312. Similarly MS-2 316 is serviced by, and primarily listening to, BS-2 310, although it is able to receive transmissions from BS-1 308 and BS-3 312. Likewise, MS-3 318 is serviced by, and primarily listening to, BS-3 312, although it is able to receive transmissions from BS-1 308 and BS-2 310.

In addition to their receiving trunked mode information on the trunked network, MS-1 314, MS-2 316 and MS-3 318 also perform dual-watch of the DMO channel to identify if a DMO call is being established. Let us consider a situation where MS-1 314 decides to initiate a DMO call, whilst performing dual-watch of the BS-1 308 in accordance with the timing diagram of FIG. 2. MS-2 316 and MS-3 318 recognise the DMO call set-up request of MS-1 314 and may decide to join the DMO call, whilst intending to perform dual-watch of their respective base transceiver stations BS-2 310 and BS-3 312. As long as BS-1 308, BS-2 310, and BS-3 312 are synchronised, i.e. the communication system is a synchronised system with the same timing used by BS-1 308, BS-2 310 and BS-3 312, MS-1 314, MS-2 316, and MS-3 318 will successfully receive information of the TMO link whilst participating in the DMO call.

However, if BS-1 308, BS-2 310, and BS-3 312 are not synchronised, only MS-1 314 will be capable of dual-watching the TMO link, since there will be no timing alignment of BS-2 310 and BS-3 312 based on the timing set-up by MS-1, in conjunction with the timing of its respective BTS BS-1 308.

In such situations, a MS that receives a DMO call with TDMA timing that is not aligned to its respective TMO timing structure may signal to the transmitting MS on the reverse link requesting a timing change of the DMO TDMA. Such a procedure is called a timing adjustment request and involves a change of TDMA numbering with TDMA frame timing alignment.

This timing adjustment procedure works well if the transmitting MS is outside the TMO system coverage while the receiving MS is within TMO network coverage, as the transmitting MS is not impacted by any TMO timing alignment. The transmitting MS will change the timing, therefore allowing receiving MS to perform dual-watch without any degradation to its performance.

However, such a timing adjustment procedure does not provide a solution to the problem scenario described with reference to FIG. 3. In this situation, there exists three individual TMO timing structures, only one of which can be aligned to the DMO timing structure.

In summary, the inventors of the present invention have recognised limitations in the ability to use dual-watch communications in certain operational scenarios. This is particularly the case in un-synchronised communication systems, where different infrastructure manufacturers or service providers operate in the same geographical region and provide complementary, but not necessarily synchronised, communication coverage.

Thus there exists a need to provide a dual mode transceiver and a system and method of using the same, wherein the aforementioned disadvantages may be alleviated.

US-A-5,978,367 describes a method of operating in a dual watch mode and synchronizing in a communication system, the method includes a first mobile station registering with a TMO system to operate in dual watch mode and receiving an instruction from a base station of the TMO system regarding a control channel of the base station and timing information for the mobile station to use in the dual watch mode. The first mobile station switches to the dual watch mode and uses either the specified control channel to communicate with the base station or to synchronise a communication in the DMO. A second mobile station wishing to operate in the dual watch mode receives an identifier of the base station from the first mobile station and reports to the base station. The base station commands the second mobile station onto the same control channel as the first mobile station.

### Summary of the present invention

In accordance with the present invention there is provided in a first aspect a transceiver as claimed in claim 1 of the appended claims.

In accordance with the present invention in a second aspect there is provided a system as claimed in claim 15 of the appended claims.

In accordance with the present invention in a third aspect there is provided a method as claimed in claim 17 of the appended claims.

The present invention beneficially allows MS transceivers having a dual watch capability to communicate with each other in a first mode, i.e. a direct mode, and to monitor incoming transmissions from a transmitter operating in a second mode, i.e. a trunked mode through base stations, e.g. arranged in a cellular network, in an efficient manner which alleviates problems obtained in the prior art as described earlier.

Embodiments of the present invention will now be described by way of example with reference to the accompanying drawings, in which:

### Brief Description of the Drawings

FIGURE 1 is a schematic diagram showing a prior art communication system providing a dual-watch capability;
FIGURE 2 is a prior art timing diagram of a TERRA TDMA communication system providing a dual-watch direct mode/trunked mode capability;
FIGURE 3 is a schematic diagram of a prior art communication system illustrating a problem obtained in operating a dual-watch capability;
FIGURE 4 is a schematic diagram showing a communication system providing a dual-watch capability in accordance with a preferred embodiment of the invention;
FIGURE 5 is a timing diagram of a call set-up sequence for DMO calls in accordance with a preferred embodiment of the invention; and
FIGURE 6 is a schematic block diagram of a subscriber mobile transceiver unit embodying the present invention.

### Description of preferred embodiments of the invention

The inventive concepts of the present invention are described as follows with reference to the TETRA standard radio communication procedures.

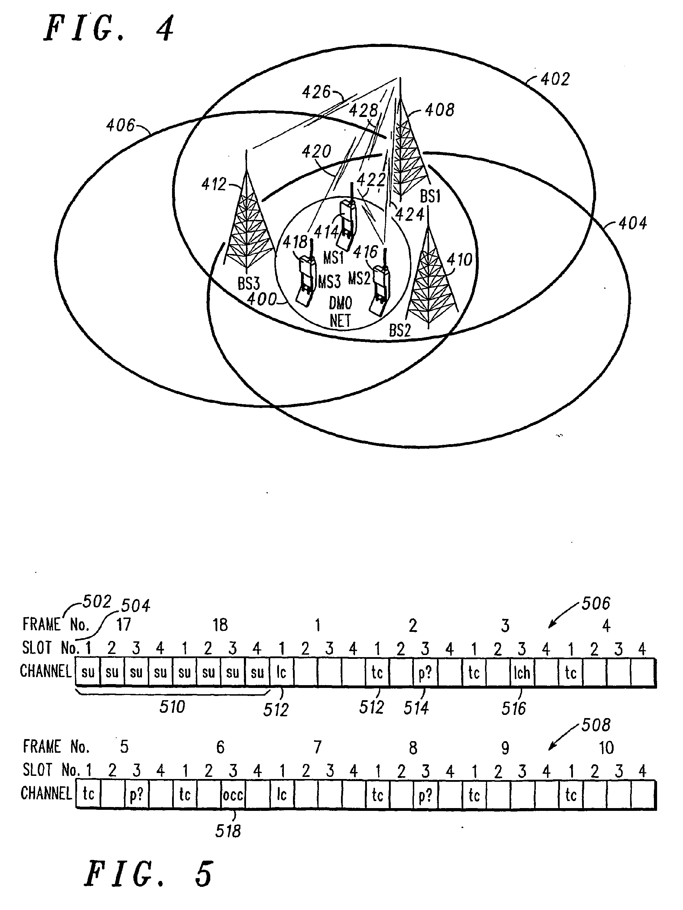

Turning now to FIG. 4, a communication system providing a dual-watch capability in accordance with a preferred embodiment of the invention is shown. To highlight the novel and inventive concepts of the present invention, use in the same configuration as shown in FIG. 3 is described.

A DMO net 400 is shown within the overlap of three TMO nets 402, 404, 406. Communication is facilitated on each of the TMO nets by respective base transceiver stations BS-1 408, BS-2 410 and BS-3 412.

Three dual mode MSs MS-1 414, MS-2 416 and MS-3 418 are present in the overlap region. Whilst there is no DMO call the three MSs MS-1 414, MS-2 416 and MS-3 418 are primarily monitoring TMO communications. MS-1 414 is serviced by, and primarily monitoring, BS-1 408, although it is able to receive communications from BS-2 410 and BS-3 412. Similarly MS-2 416 is serviced by, and primarily monitoring, BS-2 410, although it is able to receive communications from BS-1 408 and BS-3 412. Likewise, MS-3 418 is serviced by, and primarily monitoring, BS-3 412, although it is able to receive communications from BS-1 408 and BS-2 410.

In addition to their receiving trunked mode information on the trunked network, MS-1 414, MS-2 416 and MS-3 418 also perform dual-watch of the DMO channel to identify if a DMO call is being established.

In operation, the user of MS-1 414 decides to initiate a DMO call, whilst MS-1 414 is performing dual-watch of the BS-1 408. MS-2 416 and MS-3 418 recognise the DMO call set-up request of MS-1 414 and their users may well decide to join the DMO call, indicated by communication links 420 and 422 respectively.

Notably, when MS-1 414 initiates the DMO call, MS-1 414 identifies, at the beginning of the DMO call set-up message, the particular cell/base transceiver station to provide TMO information to dual-watching MSs. MS-1 414 performs dual-watch by monitoring its assigned BTS BS-1 408.This is shown by a link 428. By following the instructions of MS-1 414 in its DMO call set-up message, MS-2 416 and MS-3 418 will successfully receive information of the TMO system by performing dual-watch of BS-1 408,shown by communication links 426 and 424 respectively, whilst participating in the DMO call.

In such a manner, MS-1 414, MS-2 416, and MS-3 418 can monitor the same base transceiver station BS-1 408 of the TMO network, at least for the duration of the DMO call, by performing dual-watch. Notably, there is no requirement with this arrangement for the different TMO systems to be in synchronisation.

For group calls (point-to-multipoint) and individual calls (point-to-point) the preferred embodiment of setting up a call in a DM channel is illustrated in FIG. 5. FIG. 5 shows a timing diagram 500 of a call set-up sequence for DMO calls. In accordance with the TETRA TDMA timing structure, the communication resource is divided into eighteen frames 502 within a super-frame. Each frame 502 is divided into four time-slots 504, as shown with transmissions on the DMO channel's frame seventeen to frame four 506 and frame five to frame ten 508.

A call initiating MS such as MS-1 414 in the example described above establishes the channel synchronisation and simultaneously its role as "master" of the DMO communication link by transmitting a sequence of call set-up messages on the master up-link channel. In the example shown in FIG. 5, eight synchronization bursts ("su") 510 are sent in frames seventeen and frame eighteen of the master link. The originating MS starts to transmit traffic ("tc") 512 on slot 1, whilst slot 3 serves as supplementary control channel ("occ") 518, call preemption ("p?") 514 or linearisation channel ("lch") 516.

The call initiating dual watching MS generates and transmits via its DMO links a signal containing the information of the TMO site that it is listening to. This information can be provided either via the control messages ("occ" 518, "p?" 514 or "Ich" 516) transmitted on slot 3, or by "stealing" the traffic capacity 512, replacing traffic data with this specific control information. The TMO site information preferably provides all necessary data, allowing other MSs to decode properly the TMO site information. Such information may include frequencies, scrambling codes, network and site identities, etc.

The receivers of the receiving MSs which receive the TMO site information from the master MS (MS-1 114 in the above example) transmitting via the DMO link may be tuned during the dual-watch period, to the TMO site specified by the master MS. Once tuned to that TMO site, the dual-watching MSs continue to obtain TMO communications from that site during the DMO call.

If the selected TMO site information is received properly, the TMO site base station might request that the MSs performing dual-watch perform a site change to maintain contact with the TMO system. Such site change requests are system configuration dependent and occur from time to time.

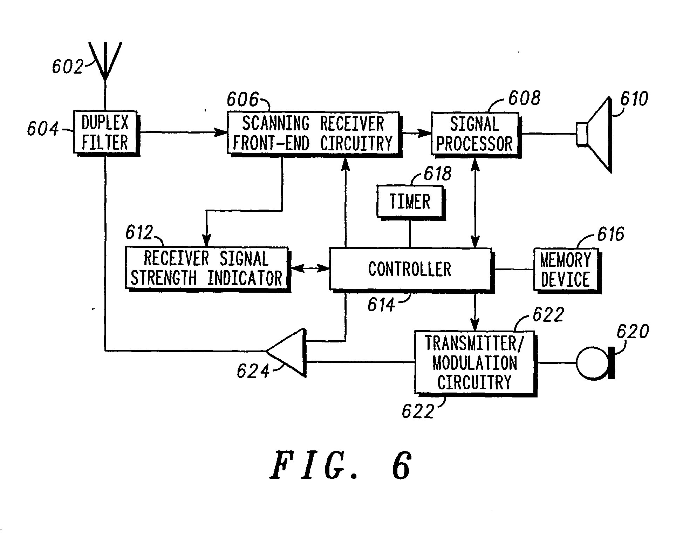

Turning now to FIG. 6, a block diagram of a dual mode subscriber transceiver unit (MS) embodying the present invention for use in the system and method described above is shown.

The MS shown in FIG 6, indicated by reference numeral 600,includes an antenna 602 preferably coupled to a duplex filter or circulator 604 that provides isolation between receive and transmit chains within the MS 600.

The receiver chain includes scanning receiver front-end circuitry 606 (effectively providing reception, filtering and intermediate or base-band frequency conversion). The scanning front-end circuit 606 scans signal transmissions from its associated BTS and any DMO call set-up messages from other MS in its talk group. The scanning front-end circuit 606 is serially coupled to a signal processing function 608.

In accordance with a preferred embodiment of the invention, the signal processor 608 has been adapted for a DMO receiving MS to receive and process a DMO call set-up message on the master-link, transmitted by another calling MS via DMO, and to determine from the transmitted message which base transceiver station should be accessed to facilitate a dual-watch operation. The signal processor 608 has also been adapted in a DMO transmission mode to include, in a DMO call set-up, as shown in FIG. 5, a signal containing information of the type described earlier, identifying the selected dual-watch base transceiver site.

A controller 614 is operably coupled to the scanning front-end circuitry 606 so that the receiver can calculate receive bit-error-rate (BER) or frame-error-rate (FER) or similar link-quality measurement data from recovered information via a received signal strength indication (RSSI) 612 function. The RSSI 612 function is operably coupled to the scanning front-end circuit 606. The memory device 616 stores a wide array of MS-specific data, such as decoding/encoding functions and the like, as well as link quality measurement information to enable an optimal communication link to be selected.

A timer 618 is operably coupled to the controller 614 to control the timing of operations, namely the transmission or reception of time-dependent signals, within the MS 600. In the context of the preferred embodiment of the present invention, timer 618 will be used to synchronize the receiving MS to the timing initiated by the calling MS, in line with the timing associated with the selected dual-watch base site.

As known in the art, an output from the signal processor 608 is typically provided to a suitable output device 610, such as a speaker and/or a visual display unit (VDU).

As regards the transmit chain, this essentially includes an input device 620, such as a microphone, coupled in series through transmitter/modulation circuitry 622 and a power amplifier 624. The transmitter/modulation circuitry 622 and the power amplifier 624 are operationally responsive to the controller, with an output from the power amplifier coupled to the duplex filter or circulator 604, as known in the art.

Of course, the various components within the MS 600 can be realised in discrete or integrated component form, with an ultimate structure therefore being merely an arbitrary selection.

In operation, upon power-on of MS 600, the MS 600 will search (scan) for the base transceiver site that offers the best signal quality. Once the MS 600 has registered with that particular base transceiver site, it continually monitors transmissions on the control channel (of the trunking system). If the user of MS 600 should wish to set up a DMO call, MS 600 transmits a DMO call set-up message, thereby defining itself as the Master MS as well as defining the master communication-link.

In accordance with a preferred embodiment of the invention, the MS 600 transmits, as part of the DMO call set up, information relating to its associated base transceiver site, such that MSs receiving the DMO call can receive the DMO call as well as monitoring transmissions from this base transceiver site in a dual-watch mode of operation.

It is within the contemplation of the invention that a receiving MS might keep in its memory 608 the timing structure of the original base station that the receiving MS was monitoring prior to joining the DMO call. Such memory information can be used to return that MS to its previously associated base transceiver site after the DMO call has been completed. Alternatively, the receiving MSs might use a standard handoff procedure to scan for and select the best-received TMO base station transmission after the DMO call has ended.

The present invention thus allows a direct mode call to identify the dual-watched site of the transmitting MS.
In this manner, other MS users wishing to join the DMO call, whilst maintaining a dual-watch capability, are able to tune their receivers to transmissions from the selected TMO base station. The transmitting MS will provide the necessary information about its dual-watched site, allowing receiving MSs to decode the information if in range of that site, thereby enhancing dual watch capability when compared to prior art arrangements.

Although the present invention has been described with reference to MSs using an unsynchronised TETRA system providing both TMO and DMO modes of operation, it is within the contemplation of the invention that alternative dual-mode systems, synchronised or not, may benefit from the inventive features described herein.

## Claims

1. A mobile transceiver (416) for use in a radio communications system comprising a plurality of communication transceivers (414,416,418), the mobile transceiver being operable in a dual watch mode to communicate with at least one other mobile communications transceiver (414) in a direct mode of operation and to receive communications from an associated base transceiver station operating in a trunked mode of operation whilst participating in a direct mode communication, wherein the transceiver (416) is operable to receive from another mobile transceiver (414) in the direct mode a signal containing information about the identity of the associated base transceiver station with which the other mobile transceiver is associated, **characterised in that** the transceiver (416) is operable in the dual watch mode to be serviced by and to monitor communications from a first base station (410), to receive a call set-up message in the direct mode from the other mobile transceiver (414) indicating the site of a second base station (408) which the other transceiver (414) is monitoring for communications in the trunked mode, to tune its receiver to the indicated site and to obtain communications in the trunked mode from the indicated site during the direct mode call initiated by the other transceiver (414).

2. A transceiver (416) according to claim 1 and which includes a processor (608,614) which in operation is capable of extracting from a received communication from a transmitter of its associated base transceiver station operating in the trunked mode of operation information to be used in synchronisation by the mobile transceiver in the direct mode of operation.

3. A transceiver (416) according to claim 1 or claim 2 and wherein the said base transceiver station identity information contained in the signal received by the transceiver (416) includes sufficient information to allow mobile dual watch transceivers receiving a communication in the direct mode from the other mobile transceiver (414) to be set to receive communications from the identified first base transceiver station (408).

4. A transceiver according to any one of the preceding claims and wherein the mobile transceiver is operable to initiate communications to one or more other mobile communications transceivers operating in the direct mode of operation.

5. A transceiver according to claim 4 and wherein the transceiver in operation is operable to indicate in a communication to another mobile transceiver in a signal sent in the direct mode of operation the identity of a base transceiver station operating in a trunked mode with which the transceiver is associated.

6. A transceiver according to any one of the preceding claims and wherein the transceiver (416) is capable of recording information about transmissions from the first base station (410) and is operable after completion of the call in the direct mode of operation to to be returned for association to the site of the first base station (410) to monitor transmissions from the first base station (410)

7. A transceiver according to any one of the preceding claims and wherein the transceiver is capable in operation of transmitting communications to one or more other mobile transceivers via a base station operating in the trunked mode of operation.

8. A transceiver (416) according to claim 7 wherein the transceiver is capable in operation of transmitting to the first base station (410) with which the mobile dual mode transceiver has been associated a signal to indicate that the transceiver (416) is ceasing or has ceased to be associated with that base station.

9. A transceiver (416) according to claim 8 and wherein the signal transmitted by the transceiver indicates the identity of the second base station (408) with which the transceiver is to be associated.

10. A transceiver (416) according to any one of the preceding claims and which is capable of monitoring communications from different base transceiver stations operating in the trunked mode and, after completion of the direct mode call, of performing a scanning operation to select an appropriate base transceiver station to associate itself with.

11. A transceiver according to any one of the preceding claims and wherein the transceiver is operable to transmit to and receive from other mobile transceivers operating in the direct mode on the same carrier frequency using a TDMA structured mutually synchronized procedure.

12. A transceiver according to claim 11 and wherein the transceiver is operable, when initiating a call in the direct mode, to transmit a signal containing information about communications it is capable of receiving in the trunked mode in one or more designated time slots of the direct mode TDMA structure other than slots used for the call set up.

13. A transceiver according to claim 12 and wherein the one or more time slots are one or more slots designated for transmission of system control data and/or traffic data.

14. A transceiver according to any one of the preceding claims and wherein the transceiver is incorporated in or is a portable or mobile radio unit.

15. A mobile dual mode communications system (400) including a plurality of mobile transceivers (414, 416, 418) each according to any one of the preceding claims adapted to communicate with each other in a direct mode.

16. A mobile dual mode communications system according to claim 15, the system also including a plurality of base transceiver stations (408, 410, 412) arranged in a cellular network and adapted to communicate in a trunked mode wherein at least one of the mobile transceivers is capable of receiving communications from at least one of the base transceiver stations operating in the trunked mode.

17. A method of operation for use in a radio communications system comprising a plurality of communication transceivers (414,416,418) each operable in a dual watch mode to communicate with at least one other mobile communications transceiver in a direct mode of operation and to receive communications from an associated base transceiver station operating in a trunked mode of operation whilst participating in a direct mode communication, including a first mobile transceiver (416) receiving from a second mobile transceiver (414) in the direct mode a signal containing information about the identity of the associated base transceiver station with which the second mobile transceiver is associated, **characterised by** the first mobile transceiver (416) in the dual watch mode being serviced by and monitoring communications from a first base station (410), receive a call set-up message in the direct mode from the second mobile transceiver (414) indicating the site of a second base station (408) which the second mobile transceiver (414) is monitoring for communications in the trunked mode, tuning its receiver to the indicated site and obtaining communications in the trunked mode from the indicated site during the direct mode call initiated by the second mobile transceiver (414).

18. A method according to claim 17 which is in accordance with the TETRA standard.

## Patentansprüche

1. Mobiler Transceiver (416) zur Verwendung in einem Funkkommunikationssystem, das eine Mehrzahl von Kommunikationstransceivern (414, 416, 418) umfasst, wobei der mobile Transceiver in einer dualen Überwachungsbetriebsart betreibbar ist, um mit mindestens einem anderen mobilen Kommunikationstransceiver (414) in einer Direktbetriebsart zu kommunizieren und Kommunikationen von einer verknüpften Basistransceiverstation zu empfangen, die in einer Bündelfunkbetriebsart arbeitet, während sie an einer Direktbetriebsartkommunikation teilnimmt, wobei der Transceiver (416) betreibbar ist, um von einem anderen mobilen Transceiver (414) in der Direktbetriebsart ein Signal zu empfangen, das Informationen über die Identität der verknüpften Basistransceiverstation umfasst, mit der der andere mobile Transceiver verknüpft ist, **dadurch gekennzeichnet, dass** der Transceiver (416) in der dualen Überwachungsbetriebsart betreibbar ist, um durch Kommunikationen von einer ersten Basisstation (410) versorgt zu werden und diese zu überwachen, um eine Anrufaufbaunachricht in der Direktbetriebsart von dem anderen mobilen Transceiver (414) zu empfangen, die die Seite einer zweiten Basisstation (408) anzeigt, die der andere Transceiver (414) für Kommunikationen in der Bündelfunkbetriebsart überwacht, um seinen Empfänger mit der angezeigten Seite abzugleichen und Kommunikationen in der Bündelfunkbetriebsart von der angezeigten Seite während des Direktbetriebsartanrufes zu erhalten, der durch den anderen Transceiver (414) initiiert wird.

2. Transceiver (416) gemäß Anspruch 1, der einen Prozessor (608, 614) umfasst, der unter Betriebsbedingungen in der Lage ist, aus einer empfangenen Kommunikation von einem Sender seiner verknüpften Basistransceiverstation, die in der Bündelfunkbetriebsart arbeitet, Informationen zu extrahieren, die durch den mobilen Transceiver in der Direktbetriebsart in einer Synchronisierung zu verwenden sind.

3. Transceiver (416) gemäß Anspruch 1 oder Anspruch 2, wobei die in dem durch den Transceiver (416) empfangenen Signal enthaltenen Basistransceiverstationsidentitätsinformationen genügend Informationen umfassen, um zu gewährleisten, dass mobile duale Überwachungstransceiver, die eine Kommunikation in der Direktbetriebsart von dem anderen mobilen Transceiver (414) empfangen, eingestellt werden, um Kommunikationen von der identifizierten ersten Basistransceiverstation (408) zu empfangen.

4. Transceiver gemäß einem der vorangehenden Ansprüche, wobei der mobile Transceiver betreibbar ist, um Kommunikationen zu einem oder mehreren anderen mobilen Kommunikationstransceivern zu initiieren, die in der Direktbetriebsart arbeiten.

5. Transceiver gemäß Anspruch 4, wobei der Transceiver unter Betriebsbedingungen betreibbar ist, um in einer Kommunikation zu einem anderen mobilen Transceiver in einem Signal, das in der Direktbetriebsart gesendet wird, die Identität einer mit dem Transceiver verknüpften Basistransceiverstation, die in einer Bündelfunkbetriebsart arbeitet, anzuzeigen.

6. Transceiver gemäß einem der vorangehenden Ansprüche, wobei der Transceiver (416) in der Lage ist, Informationen über Übertragungen von der ersten Basisstation (410) aufzuzeichnen, und nach einem Abschluss des Anrufes in der Direktbetriebsart betreibbar ist, um für eine Verknüpfung zu der Seite der ersten Basisstation (410) retourniert zu werden, um Übertragungen von der ersten Basisstation (410) zu überwachen.

7. Transceiver gemäß einem der vorangehenden Ansprüche, wobei der Transceiver unter Betriebsbedingungen in der Lage ist, Kommunikationen zu einem oder mehreren anderen mobilen Transceivern über eine Basisstation zu übertragen, die in der Bündelfunkbetriebsart arbeitet.

8. Transceiver (416) gemäß Anspruch 7, wobei der Transceiver unter Betriebsbedingungen in der Lage ist, an die erste Basisstation (410), mit der der mobile Dualbetriebsarttransceiver verknüpft worden ist, ein Signal zu übertragen, um anzuzeigen, dass der Transceiver (416) aufhört oder aufgehört hat, mit dieser Basisstation verknüpft zu sein.

9. Transceiver (416) gemäß Anspruch 8, wobei das durch den Transceiver übertragene Signal die Identität der zweiten Basisstation (408) anzeigt, mit der der Transceiver zu verknüpfen ist.

10. Transceiver (416) gemäß einem der vorangehenden Ansprüche, der in der Lage ist, Kommunikationen von verschiedenen Basistransceiverstationen zu überwachen, die in der Bündelfunkbetriebsart arbeiten, und nach Abschluss des Direktbetriebsartanrufes einen Abtastbetrieb durchzuführen, um eine geeignete Basistransceiverstation auszuwählen, mit der er sich selbst verknüpft.

11. Transceiver gemäß einem der vorangehenden Ansprüche, wobei der Transceiver betreibbar ist, um zu anderen mobilen Transceivern, welche in der Direktbetriebsart arbeiten, auf der selben Trägerfrequenz unter Verwendung eines gegenseitig synchronisierten TDMA-strukturierten Verfahrens zu übertragen und von diesen zu empfangen.

12. Transceiver gemäß Anspruch 11, wobei der Transceiver, wenn er einen Anruf in der Direktbetriebsart initiiert, betreibbar ist, um ein Signal zu übertragen, das Informationen über Kommunikationen enthält, die er in der Bündelfunkbetriebsart in einem oder mehreren vorgesehenen anderen Zeitschlitzen der Direktbetriebsart-TDMA-Struktur, als für den Verbindungsaufbau verwendeten Schlitzen, empfangen kann.

13. Transceiver gemäß Anspruch 12, wobei der eine oder die mehreren Zeitschlitze ein oder mehrere Schlitze sind, die für eine Übertragung von Systemsteuerungsdaten und/oder Verkehrsdaten vorgesehen sind.

14. Transceiver gemäß einem der vorangehenden Ansprüche, wobei der Transceiver eine tragbare oder mobile Funkeinheit ist oder darin eingebaut ist.

15. Mobiles Dualbetriebsartkommunikationssystem (400), das eine Mehrzahl von mobilen Transceivern (414, 416, 418) umfasst, jeder gemäß einem der vorangehenden Ansprüche, die adaptiert sind, um untereinander in einer Direktbetriebsart zu kommunizieren.

16. Mobiles Dualbetriebsartkommunikationssystem gemäß Anspruch 15, wobei das System außerdem eine Mehrzahl von Basistransceiverstationen (408, 410, 412) umfasst, die in einem zellularen Netzwerk angeordnet sind und adaptiert sind, um in einer Bündelfunkbetriebsart zu kommunizieren, wobei mindestens einer der mobilen Transceiver in der Lage ist, Kommunikationen von mindestens einer der Basisstationen zu empfangen, die in der Bündelfunkbetriebsart arbeiten.

17. Betriebsverfahren zur Verwendung in einem Funkkommunikationssystem, das eine Mehrzahl von Kommunikationstransceivern (414, 416, 418) umfasst, wobei jeder in einer dualen Überwachungsbetriebsart betreibbar ist, um mit mindestens einem anderen mobilen Kommunikationstransceiver in einer Direktbetriebsart zu kommunizieren und Kommunikationen von einer verknüpften Basistransceiverstation zu empfangen, die in einer Bündelfunkbetriebsart arbeitet, während sie an einer Direktbetriebsartkommunikation teilnimmt, das umfasst: einen ersten mobilen Transceiver (416), der von einem zweiten mobilen Transceiver (414) in der Direktbetriebsart ein Signal empfängt, das Informationen über die Identität der verknüpften Basistransceiverstation enthält, mit der der zweite mobile Transceiver verknüpft ist, **dadurch gekennzeichnet, dass** der erste mobile Transceiver (416) in der dualen Überwachungsbetriebsart durch Kommunikationen von einer ersten Basisstation (410) versorgt wird und diese überwacht, eine Anrufaufbaunachricht in der Direktbetriebsart von dem zweiten mobilen Transceiver (414) empfängt, die die Seite einer zweiten Basisstation (408) anzeigt, die der zweite mobile Transceiver (414) für Kommunikationen in der Bündelfunkbetriebsart überwacht, seinen Empfänger mit der angezeigten Seite abgleicht und Kommunikationen in der Bündelfunkbetriebsart von der angezeigten Seite während des Direktbetriebsartanrufes erhält, der durch den zweiten mobilen Transceiver (414) initiiert wird.

18. Verfahren gemäß Anspruch 17, das mit dem TETRA-Standard übereinstimmt.

## Revendications

1. Emetteur-récepteur mobile (416) à utiliser dans un système de radiocommunication comprenant une pluralité d'émetteurs-récepteurs de communication (414, 416, 418), l'émetteur-récepteur mobile est configuré pour fonctionner dans un mode double veille de façon à communiquer avec au moins un autre émetteur-récepteur de communication mobile (414) dans un mode de fonctionnement direct et à recevoir des communications en provenance d'une station émettrice-réceptrice de base associée fonctionnant dans un mode de fonctionnement à ressources partagées tout en participant à une communication en mode direct, l'émetteur-récepteur (416) étant configuré pour, lorsqu'il fonctionne en mode direct, recevoir d'un autre émetteur-récepteur mobile (414) un signal contenant des informations sur l'identité de la station émettrice-réceptrice de base associée à laquelle l'autre émetteur-récepteur mobile est associé, **caractérisé en ce que** l'émetteur-récepteur (416) est configuré pour, lorsqu'il fonctionne en mode double veille, être desservi par une première station de base (410) et surveiller les communications provenant de celle-ci, recevoir en provenance de l'autre émetteur-récepteur mobile (414) un message d'établissement d'appel en mode direct indiquant le site d'une deuxième station de base (408) que l'autre émetteur-récepteur (414) est en train de surveiller pour des communications en mode ressources partagées, régler son récepteur sur le site indiqué et obtenir des communications en mode ressources partagées en provenance du site indiqué, pendant l'appel en mode direct démarré par l'autre émetteur-récepteur (414).

2. Emetteur-récepteur (416) selon la revendication 1, et qui comprend un processeur (608, 614) capable, en utilisation, d'extraire d'une communication reçue en provenance d'un émetteur-récepteur de sa station émettrice-réceptrice de base associée fonctionnant en mode ressources partagées des informations à utiliser pour une opération de synchronisation par l'émetteur-récepteur mobile en mode de fonctionnement direct.

3. Emetteur-récepteur (416) selon la revendication 1 ou la revendication 2, et dans lequel lesdites informations d'identité de station émettrice-réceptrice de base contenues dans le signal reçu par l'émetteur-récepteur (416) contiennent des informations suffisantes pour permettre à des émetteurs-récepteurs mobiles à double veille recevant une communication en mode direct en provenance de l'autre émetteur-récepteur mobile (414) d'être réglés de façon à recevoir des communications en provenance de la première station émettrice-réceptrice de base identifiée (408).

4. Emetteur-récepteur selon l'une quelconque des revendications précédentes, et dans lequel l'émetteur-récepteur mobile est configuré pour démarrer des communications à destination d'un ou plusieurs autres émetteurs-récepteurs de communication mobiles fonctionnant en mode direct.

5. Emetteur-récepteur selon la revendication 4, et dans lequel l'émetteur-récepteur est configurer pour indiquer, en utilisation, dans une communication à destination d'un autre émetteur-récepteur mobile, dans un signal envoyé en mode direct, l'identité d'une station émettrice-réceptrice de base fonctionnant dans un mode ressources partagées, à laquelle l'émetteur-récepteur est associé.

6. Emetteur-récepteur selon l'une quelconque des revendications précédentes, et dans lequel l'émetteur-récepteur (416) est capable d'enregistrer des informations concernant des transmissions provenant de la première station de base (410) et est configuré pour, après l'achèvement de la communication en mode direct, être ramené en situation d'association au site de la première station de base (410) pour surveiller les transmissions provenant de la première station de base (410).

7. Emetteur-récepteur selon l'une quelconque des revendications précédentes, et dans lequel l'émetteur-récepteur est capable, en utilisation, de transmettre des communications à un ou plusieurs autres émetteurs-récepteurs mobiles, via une station de base fonctionnant en mode ressources partagées.

8. Emetteur-récepteur (416) selon la revendication 7, dans lequel l'émetteur-récepteur est capable, en utilisation, de transmettre un signal à la première station de base (410) à laquelle l'émetteur-récepteur mobile à double veille a été associé, pour indiquer que l'émetteur-récepteur (416) cesse ou a cessé d'être associé à cette station de base.

9. Emetteur-récepteur (416) selon la revendication 8, et dans lequel le signal transmis par l'émetteur-récepteur indique l'identité de la deuxième station de base (408) à laquelle l'émetteur-récepteur doit être associé.

10. Emetteur-récepteur (416) selon l'une quelconque des revendications précédentes, et qui est capable de surveiller des communications en provenance de différentes stations émettrices-réceptrices de base fonctionnant en mode ressources partagées et, après l'achèvement de la communication en mode direct, d'exécuter une opération de balayage pour sélectionner une station émettrice-réceptrice de base appropriée pour s'y associer.

11. Emetteur-récepteur selon l'une quelconque des revendications précédentes, et dans lequel l'émetteur-récepteur est configuré pour transmettre et recevoir à destination/en provenance d'autres émetteurs-récepteurs mobiles fonctionnant en mode direct, sur la même fréquence porteuse, au moyen d'une procédure de synchronisation mutuelle à structure TDMA.

12. Emetteur-récepteur selon la revendication 11, et dans lequel l'émetteur-récepteur est configuré pour, lorsqu'il démarre un appel en mode direct, transmettre un signal contenant des informations concernant les communications qu'il est capable de recevoir au mode ressources partagées, dans une ou plusieurs tranches de temps désignées de la structure TDMA du mode direct autres que les tranches de temps qui sont utilisées pour l'établissement de l'appel.

13. Emetteur-récepteur selon la revendication 12, et dans lequel la ou les tranches de temps sont une ou plusieurs tranches de temps désignées pour la transmission de données de contrôle du système et/ou des données de trafic.

14. Emetteur-récepteur selon l'une quelconque des revendications précédentes, et dans lequel l'émetteur-récepteur est incorporé dans, ou est lui-même, une unité radio mobile ou portable.

15. Système de communication mobile à double mode (400) comprenant une pluralité d'émetteurs-récepteurs mobiles (414, 416, 418), qui sont chacun conformes à l'une quelconque des revendications précédentes et qui sont adaptés pour communiquer entre eux en mode direct.

16. Système de communication mobile à double mode selon la revendication 15, le système comprenant également une pluralité de stations émettrices-réceptrices de base (408, 410, 412) agencées en un réseau cellulaire et adaptées pour communiquer dans un mode ressources partagées, dans lequel au moins l'un des émetteurs-récepteurs mobiles est capable de recevoir des communications en provenance d'au moins l'une des stations émettrices-réceptrices de base fonctionnant en mode ressources partagées.

17. Procédé de fonctionnement à mettre en oeuvre dans un système de radiocommunication comprenant une pluralité d'émetteurs-récepteurs de communication (414, 416, 418) étant chacun configurés pour fonctionner dans un mode double veille de façon à communiquer avec au moins un autre émetteur-récepteur de communication mobile dans un mode de fonctionnement direct et à recevoir des communications en provenance d'une station émettrice-réceptrice de base associée fonctionnant dans un mode de fonctionnement à ressources partagées tout en participant à une communication en mode direct, comprenant le fait qu'un premier émetteur-récepteur mobile (416), lorsqu'il fonctionne en mode direct, reçoit d'un deuxième émetteur-récepteur mobile (414) un signal contenant des informations concernant l'identité de la station émettrice-réceptrice de base associée à laquelle le deuxième émetteur-récepteur mobile est associé, **caractérisé par le fait que** le premier émetteur-récepteur mobile (416), lorsqu'il fonctionne en mode double veille, est desservi par une première station de base (410) et surveille les communications provenant de celle-ci, reçoit en provenance du deuxième émetteur-récepteur mobile (414) un message d'établissement d'appel en mode direct indiquant le site d'une deuxième station de base (408) que le deuxième émetteur-récepteur (414) est en train de surveiller pour des communications en mode ressources partagées, règle son récepteur sur le site indiqué et obtient des communications en mode ressources partagées en provenance du site indiqué, pendant l'appel en mode direct démarré par le deuxième émetteur-récepteur mobile (414).

18. Procédé selon la revendication 17, qui est conforme à la norme TETRA.
